# EUROPEAN PATENT SPECIFICATION

(11) **EP 2 678 903 B1**
(45) Date of publication and mention of the grant of the patent: **16.10.2019**
(21) Application number: 12707893.9
(22) Date of filing: 30.01.2012
(51) Int. Cl.: H02G 3/12, H02G 3/00, H01R 25/16, H01R 13/514, H01R 13/73

(54) **A MODULAR ELECTRICAL CONNECTION UNIT**
MODULARE ELEKTRISCHE VERBINDUNGSEINHEIT
UNITÉ DE CONNEXION ÉLECTRIQUE MODULAIRE

(30) Priority: 25.02.2011 GB 201103279
(43) Date of publication of application: 01.01.2014
(73) Proprietor: Flex Connectors Limited, Brentford, Middlesex TW8 9DD (GB)
(72) Inventor: GARTON, Stephen, Isleworth Middlesex TW7 4QJ (GB); MAN, Rita, Ilford Essex IG6 2NA (GB)
(74) Representative: Barker Brettell LLP
(86) International application number: PCT/GB2012/050190
(87) International publication number: WO 2012/114081

(56) References cited:
- EP-A1- 1 075 066
- WO-A1-2005/124936
- DE-A1- 1 920 756
- US-A- 4 313 646
- US-A- 5 232 381
- US-A- 5 595 494
- US-A1- 2005 121 218
- US-B1- 6 939 180

## Description

The present invention relates to electrical lighting and electrical power control, and particularly relates to modular electrical connectors for lighting circuits, and more particularly relates to an electrically conductive member for a connection unit, a connection unit and a mounting bracket for a connection unit.

Electrical connection units are known for use in various applications. For example, such connection units are used in the field of electrical lighting systems in which power and control signals are supplied to a plurality of lights or luminaires typically disposed at spaced apart locations across the ceiling of an office workspace or the like.

A known connection unit is provided with a plurality of 7-pole sockets to which a respective plurality of luminaires can be connected by means of cables fitted with appropriate plugs. Each socket has seven socket contacts and the sockets are mounted adjacent to one another on a printed circuit board (PCB). The PCB has seven parallel electrically conducting tracks and the individual socket contacts of each socket are soldered to each of the conducting tracks, respectively.

The connection unit also comprises a terminal block having seven connectors to which wires from an external source can be attached. These wires may include, for example, live (L_{X}), emergency live (L_{EM}), neutral (N), earth and switch live (L_{S}) wires as well as wires providing a low voltage supply for devices such as dimmer switches, occupancy sensors, etc. Each of the terminal block connectors is, in turn, connected to one of the seven tracks on the PCB, respectively, by an intermediate connecting wire. Thus, power can be supplied to each one of a number of luminaires plugged into the sockets of the connection unit.

However, there are a number of drawbacks to a connection unit having the above-described configuration. Firstly, the PCB is relatively expensive and adds to the overall cost of the connection unit, which is undesirable. Secondly, in the case of, for example, a 6-way connection unit having six 7-pole sockets, there are forty two separate solder joints required to attach all of the socket contacts to the PCB. Also, the intermediate connecting wires are typically soldered to the respective conducting tracks of the PCB, requiring a further seven solder joints. All of this soldering is time-consuming and thus increases the manufacturing time of the connection unit and therefore the cost. Furthermore, the more solder joints there are, the greater the likelihood of a fault occurring with one of the solder joints. Diagnosing and rectifying such faults is also undesirably time-consuming.

Examples of known electrical connection units are disclosed in US5232381, in which a multi-way multiple plug comprises a socket seat portion defined by a housing inside which at least a hot plate and a neutral plate are disposed. In US2005121218, a power outlet strip is described that includes a housing having an upper casing secured to a lower casing and having an opening to receive a cover, the cover includes one or more apertures to receive one or more female receptacles each having two or more holes for receiving prongs. The cover may be changed to the other covers for providing different colours or the like for the outer appearance of the power outlet strip. Whereas in US6939180, a receptacle for extension cord is disclosed, which includes a housing having multiple slot pairs and an opening.

Further examples include EP1075066, in which a serializable power receiver/supply unit consists of a body, terminals, wiring and at least one active component; while in US4313646 a power distribution system for electrification of modular wall panels is described. The system includes a power box having a plurality of buss bars which provides multiple tap-off capabilities.

Each of the documents US5232381, US2005121218, US6939180 and EP1075066 discloses the preamble of independent claim 1.

It is an object of the present invention to provide a connection unit which substantially overcomes or mitigates at least some of the above-mentioned problems.

According to a first aspect of the present invention, there is provided an electrically conductive member according to Claim 1.

The electrically conducting material is preferably a metal or a metal alloy. The elongate strip may be fabricated from a metal such as copper or a metal alloy such as brass. However, it is to be appreciated that any suitable electrical conductor may be used in conjunction with the present invention, without sacrificing any of the benefits or advantages of the invention.

Preferably, the elongate strip is formed by machining, and most preferably by machine pressing. However, any other form of fabrication technique may alternatively be used.

Preferably, the elongate strip has a thickness in the range of about 0.3 mm to about 0.7 mm, and is most preferably 0.5 mm.

Preferably, the plurality of protruding contacts, which preferably act as socket contacts, are disposed at regularly spaced intervals along the length of the elongate strip, which defines a longitudinal axis along its length dimension.

Preferably, each socket contact comprises first and second portions adjoining respective opposite edges of the elongate strip, the first and second portions extending substantially perpendicularly to the longitudinal axis of the elongate strip so as to define a plug pin receiving opening therebetween.

Preferably, the first and second portions are biased towards each other such that, in use, when a plug pin is inserted into the plug pin receiving opening, the first and second portions exert a retaining force on the plug pin.

More preferably, the first and second portions have an arcuate cross-section and define a plug pin receiving opening which is substantially circular.

Preferably, the elongate strip comprises a plurality of barbs disposed along at least one edge of the strip such that, in use, the barbs engage with a surface of each of the plurality of sockets so as to secure the strip thereto.

Preferably, the elongate strip comprises a hole disposed adjacent to each socket contact such that, in use, the hole engages with a pin disposed on each respective socket so as to register the strip thereto.

Preferably, each pair of adjacent sockets, forming the plurality of sockets, is coupled to a locking member disposed therebetween.

In an embodiment not part of the invention, the connection unit may further comprise an interconnection socket; wherein the elongate strip comprises a substantially right angle bend at a first end thereof, such that at least one protruding contact disposed proximal to the first end is engageable with the interconnection socket.

The connection unit may further comprise an interconnection plug;
wherein a second end of the elongate strip comprises a substantially right angle bend such that a plug pin is coupled to the second end so as to be engageable with the interconnection plug.

The connection unit may comprise a terminal block having at least one pillar connector, the at least one pillar connector comprising an opening for receiving a wire therein;
wherein a second end of the elongate strip projects into the opening of the pillar connector such that movement of the pillar connector causes a wire disposed in the wire receiving opening to be sandwiched between a surface of the pillar connector and the respective second end of the elongate strip.

Preferably, each of the plurality of sockets comprises a plug receiving cavity and at least one socket contact receiving hole extending from the base of the socket into the plug receiving cavity; and
wherein the electrically conductive member is preferably disposed adjacent to the respective socket bases such that each one of the plurality of socket contacts preferably projects through a respective one of the socket contact receiving holes of each socket into the respective plug receiving cavity thereof.

Preferably, each elongate strip comprises a plurality of barbs disposed along at least one edge of the strip, the barbs engaging with the respective bases of each of the plurality of sockets so as to secure the strip thereto.

Preferably, each respective elongate strip comprises a hole disposed adjacent to each socket contact which engages with a pin disposed adjacent to the at least one socket contact receiving hole on the socket base of each of the plurality of sockets so as to register the strip thereto.

The connection unit may comprise two or more electrically conductive members, and more preferably a plurality of electrically conductive members, each comprising a plurality of protruding contacts (e.g. socket contacts) disposed at regularly spaced intervals along its length.

The connection unit may comprise seven electrically conductive members. However, it is to be appreciated that any number of electrically conductive members may be used in conjunction with the connection unit of the present invention, depending on the particular application and desired modular network of connection units.

Preferably, the connection unit further comprises a housing, wherein the plurality of sockets and the at least one electrically conductive member define a socket assembly, the socket assembly preferably being retained within the housing; the housing comprising:
a base; and
first and second side walls which extend perpendicularly from opposite edges of the base.

Each of the first and second side walls may comprise a channel formed in the respective exterior surface thereof, each channel preferably extending in a direction parallel to said edges of the base and being spaced apart therefrom.

It is to be understood that the connection units of the present invention are able to form modular networks of inter-connected units and therefore the present invention is inherently scalable and customizable to accommodate the particular electrical application. The scalability is essentially limitless, as additional connection units can be added (by simply plugging them into one another) to existing arrangements to increase the capacity of a particular network, for example a lighting system, so that additional lights can be added and controlled via a scalable network of connection units. Hence, any number of connection units, comprising any number of electrically conductive members, can be configured to suit an intended electrical network. Thus, the modularity and scalability of the present invention are particularly advantageous, as future expansion or needs for electrical power or control of lighting system etc, can be readily accommodated without the need to replace existing wiring or sockets etc.

It is to be appreciated that the connection units can be directly plugged into one another via the socket and plug arrangements as discussed above, and/or alternatively by way of bespoke single or double extenders (e.g. cables compatible with the present socket and plugs). Therefore, where extenders are used, this further increases the physical scalability of the modular network, as any desired length of cable may be used.

Embodiments of the present invention will now be described, by way of example only, with reference to the accompanying drawings, in which:
**Figure 1** is a perspective view of a connection unit according to an embodiment of the present invention;
**Figure 2** is a perspective view of a housing of the connection unit shown in Figure 1;
**Figure 3** is a perspective view of a socket assembly of the connection unit shown in Figure 1;
**Figure 4** is a perspective view of a socket of the socket assembly shown in Figure 3;
**Figure 5** is a plan view of the underneath of the socket shown in Figure 4;
**Figure 6** is a top perspective view of a locking member of the socket assembly shown in Figure 3;
**Figure 7** is a bottom perspective view of the locking member shown in Figure 6;
**Figure 8** is perspective view of an interconnection socket of the socket assembly of Figure 3;
**Figure 9** is perspective view of a preferred electrically conductive member for use with the socket assembly of Figure 3;
**Figure 10** is a perspective view showing an arrangement of a plurality of electrically conductive members for use with the socket assembly of Figure 3;
**Figure 11** is a perspective view showing the arrangement of the sockets and socket contacts in the socket assembly of Figure 3;
**Figure 12** is a plan view of the underside of the socket assembly of Figure 3;
**Figure 13** is a perspective view of an end cap of the connection unit of Figure 1;
**Figure 14** is a perspective view showing the terminal block assembly and the socket assembly of the connection unit of Figure 1;
**Figure 15** is a top perspective view of a terminal block of the terminal block assembly shown in Figure 14;
**Figure 16** is a bottom perspective view of the terminal block of Figure 15;
**Figure 17** is a perspective view showing the arrangement of first and second terminal blocks of the terminal block assembly of Figure 14 in more detail;
**Figure 18** is a perspective view showing the arrangement of electrically conductive members of Figure 10 and the connectors of the first and second terminal blocks of Figure 17;
**Figure 19** is a perspective view of a bracket, not part of the invention, for use in mounting the connection unit of Figure 1;
**Figure 20** is a perspective view showing a first mounting arrangement, not part of the invention, of a connection unit;
**Figure 21** is a perspective view showing attachment and detachment of a connection unit to/from the bracket of Figure 19;
**Figure 22** is a perspective view showing a second mounting arrangement, not part of the invention, of a connection unit;
**Figure 23** is a perspective view showing a third mounting arrangement, not part of the invention, of a connection unit;
**Figure 24** is a perspective view showing a fourth mounting arrangement, not part of the invention, of a connection unit;
**Figure 25** is a perspective view of a connection unit according to an embodiment of the present invention;
**Figure 26** is a perspective view showing an interconnection plug of the connection unit of Figure 25;
**Figure 27** is a perspective view showing the arrangement of the pins of the interconnection plug of Figure 26;
**Figure 28** is a perspective view showing a mounting arrangement, not part of the invention, of the connection unit of Figure 25; and
**Figure 29** is a perspective view of an example modular network of connection units according to the present invention, along with sockets, plugs, extender leads, switches, switch control units and a hub unit.

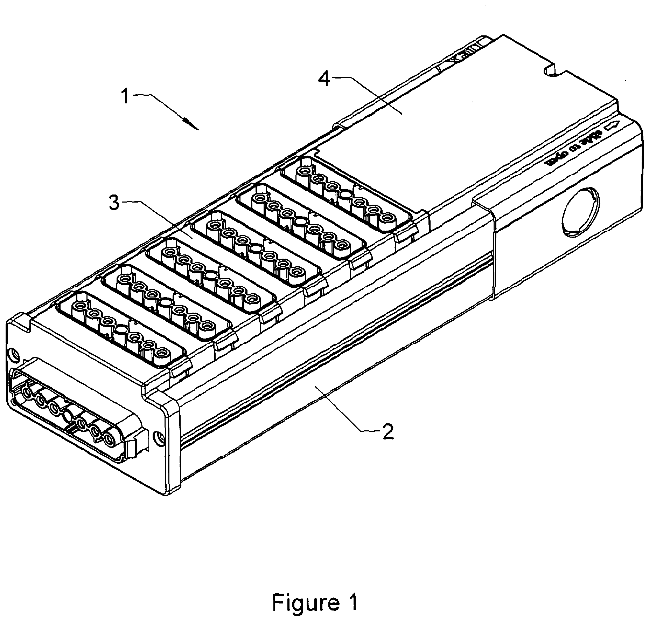

Referring to Figure 1, the connection unit 1 comprises a housing 2, a socket assembly 3 and a terminal block assembly 4.

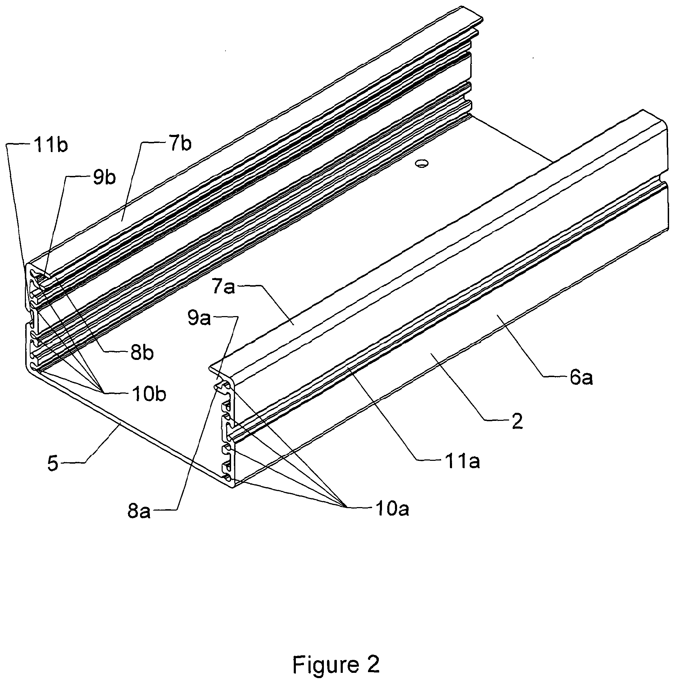

Referring to Figure 2, the housing 2 has a generally U-shaped cross-section comprising a base 5 and first and second side walls 6a, 6b. A flange 7a projects inwardly from the top of the first side wall 6a and extends parallel to the base 5. A further projection 8a extends from the first side wall 6a substantially parallel to the flange 7a, and is spaced apart therefrom so as to define a socket assembly retaining channel 9a therebetween. The cross-section of the first wall 6a is profiled so as to provide a plurality of attachment points 10a at either end thereof, each attachment point 10a having a generally circular cross-section and being suitable for receiving a screw, or similar threaded fixing means, therein. The first side wall 6a further comprises an installation channel 11a disposed on an outer surface thereof, and extending along the length of the first side wall 6a about half way between the base 5 and the flange 7a. The installation channel 11a is used to mount the connection unit 1 in position for use in a particular application as will be described in more detail later. The second side wall 6b, is the mirror image of the first side wall 6a and comprises a flange 7b, a projection 8b, a socket assembly retaining channel 9b, attachment points 10b and installation channel 11b.

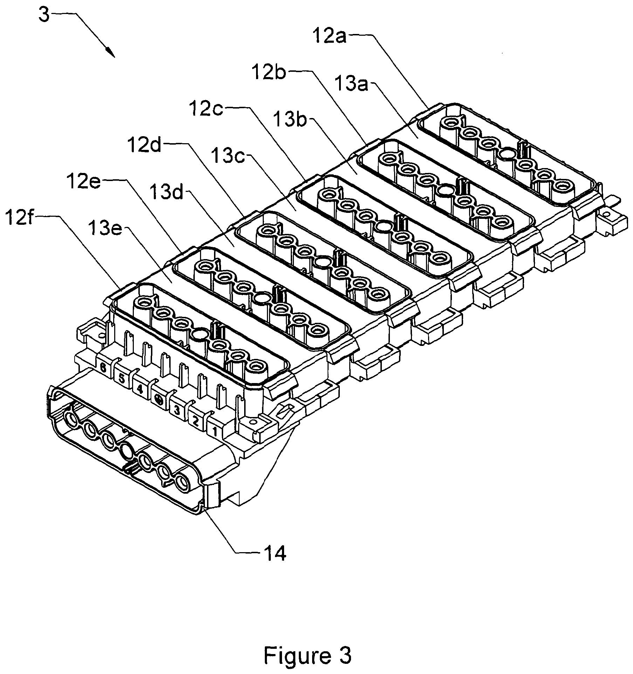

Referring to Figure 3, the socket assembly 3 comprises a plurality of sockets 12a-f, a plurality of locking members 13a-e, an interconnection socket 14 and a plurality of electrically conductive members (not shown in Figure 3).

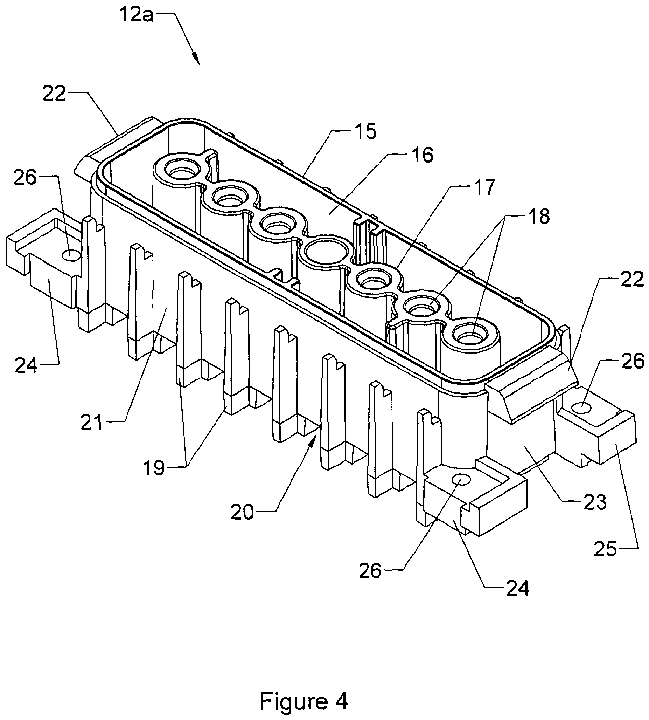

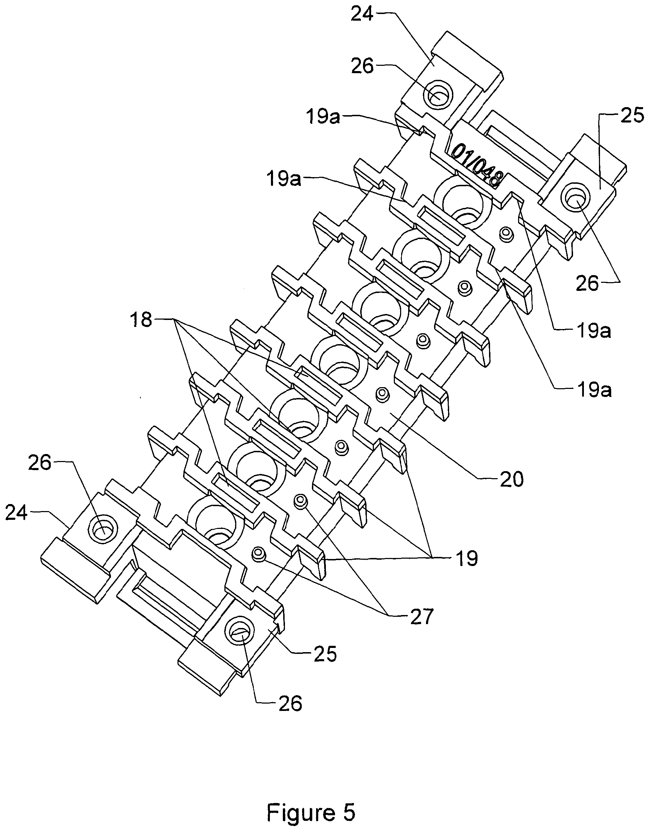

Referring to Figure 4, a socket 12a of the socket assembly 3 comprises a generally hollow body portion 15 of substantially rectangular cross-section, which defines a plug receiving cavity 16 therein. A socket contact support structure 17 is disposed within the plug receiving cavity 16. The socket contact support structure 17 comprises a plurality of bosses arranged in a line, each having a socket contact receiving hole 18 formed therethrough. The body portion 15 is provided with a plurality of parallel ribs 19 which extend laterally across the underside of the base 20 of the body portion 15 and up the exterior of each side wall 21 (see also Figure 5). A pair of plug retaining latches 22 are disposed on each end face 23 of the body portion 15, respectively. The plug retaining latches 22 cooperate, in use, with corresponding socket retaining latches disposed on a plug to be connected to the socket 12a, so as to retain the plug in the socket 12a. Two pairs of projections 24, 25 extend from the corners of the body portion 15 adjacent to the base 20. The projections 24, 25 are shaped such that adjacent sockets can only be placed next to each other in a specific orientation as will be described in more detail later. Each projection 24, 25 also comprises a hole 26 formed therethrough.

Referring to Figure 5, it can be seen that the socket contact receiving holes 18 of the socket contact support structure 17 extend through to the base 20 of the socket 12a from the plug receiving cavity 16. On the underside of the base 20, the ribs 19 form guides for receiving the elongate strip, allowing the socket contact to be received into the socket contact receiving holes 18. A socket contact retaining pin 27 is disposed adjacent to each socket contact receiving hole 18, between the adjacent ribs 19. Each rib 19 includes two recesses 19a that act as detents or securing locations into which barbs 42 on the elongate strip can be received to help secure the electrically conductive member 37a into the socket 12a (as discussed below).

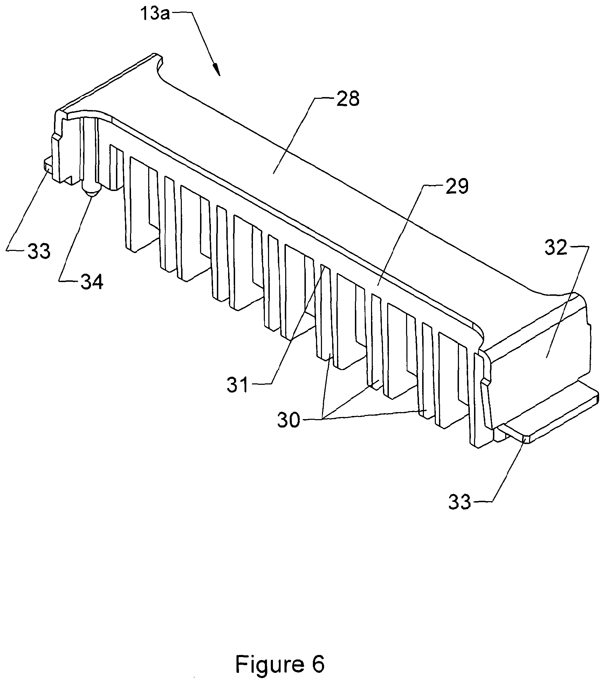

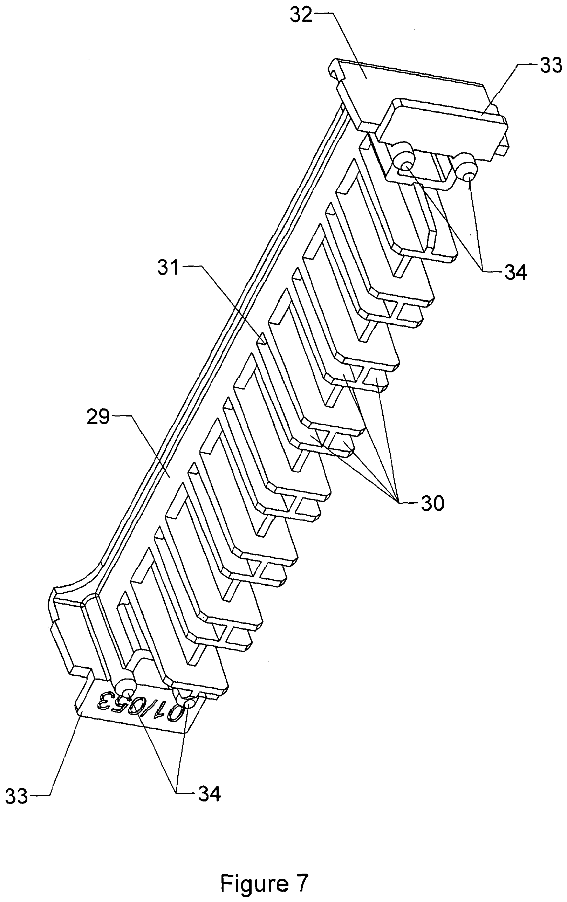

Referring to Figures 6 and 7, the locking member 13a comprises an upper surface 28 which is shaped so as to match the space between two adjacent sockets 12 a-f of the socket assembly 3. Each side face 29 of the locking member 13a is provided with a plurality of guide slots 30 disposed at spaced apart locations therealong. The end of each guide slot 30 adjacent to the upper surface 28 is enclosed so as to form a pocket 31. Each end face 32 of the locking member 13a comprises a tab 33 which projects at right angles from the end face 32. Two pairs of pins 34 are disposed adjacent to each tab 33 and project downwards, parallel to each end face 29, respectively.

The other sockets 12b-f of the socket assembly 3 are the same as the socket 12a described with reference to Figures 4 and 5. Similarly, the locking members 13b-e of the socket assembly 3 are the same as the locking member 13a described with reference to Figures 6 and 7.

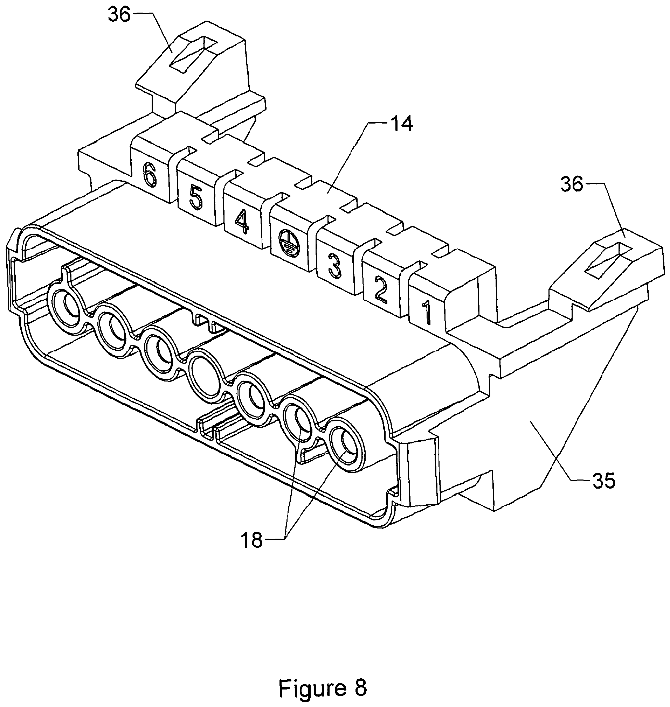

Referring to Figure 8, the interconnection socket 14 is similar to the other sockets 12a-f of the socket assembly 3, with the exception that the ribs which form the guide members between each of the socket contact receiving holes 18 do not extend along the side walls of the interconnection socket 14. Furthermore, the end faces 35 project beyond the base of the interconnection socket 14 and each end face 35 comprises guide member 36 which extends at right angles therefrom.

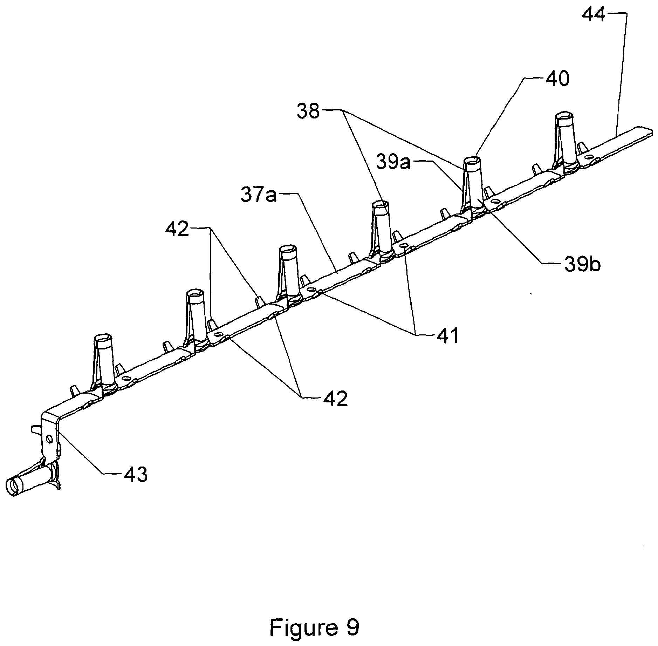

Referring to Figure 9, the electrically conductive member 37a comprises an elongate strip of an electrically conducting material, which is ideally formed from a metal, such as copper etc., or a metal alloy, such as brass etc. However, any suitable conductive material may alternatively be used. A plurality of protruding contacts 38, which act as socket contacts, are disposed at regularly spaced locations along the elongate strip. Each socket contact 38 comprises first and second portions 39a, 39b which adjoin and extend from opposite edges of the elongate strip. The first and second portions 39a, 39b are folded substantially at right angles to the strip and are biased towards each other such that the ends of the first and second portions 39a, 39b contact each other. Each portion 39a, 39b is curved, having an arcuate cross-section, such that their ends define a plug pin receiving opening 40 therebetween, the plug pin receiving opening 40 being substantially circular. The member 37a also comprises a hole 41 disposed adjacent to each socket contact 38 and a plurality of barbs 42 disposed along the edges of the member 37a and spaced apart at regular intervals.

In the presently described embodiment, the connection unit 1 is a 6-way unit having six sockets 12a-f and an additional interconnection socket 14 which is orientated at right angles to the other sockets 12a-f. Accordingly, the electrically conductive member 37a is provided with seven individual socket contacts 38. Furthermore, the elongate strip includes a ninety degree bend at a first end 43 thereof, which defines a socket contact for the interconnection socket 14 on the opposite side of the bend from the remaining socket contacts. At a second end 44 of the strip, the barbs 42 are removed so as to define a portion of the member 37a to be connected to the terminal block assembly 4 of the connection unit 1, to be described in more detail later.

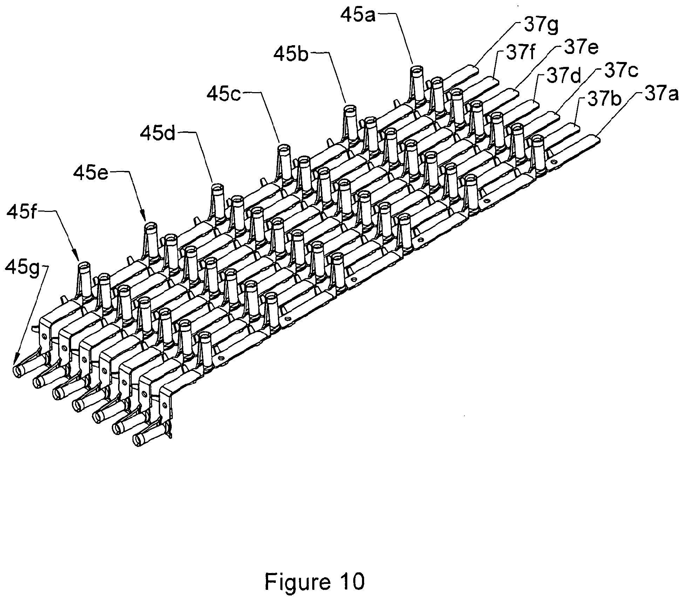

Referring to Figure 10, the socket assembly 3 comprises seven electrically conductive members 37 a-g. The members 37a-g are arranged parallel to one another such that the individual socket contacts 38 on each elongate strip align with one another to form a plurality of rows of socket contacts 45a-g.

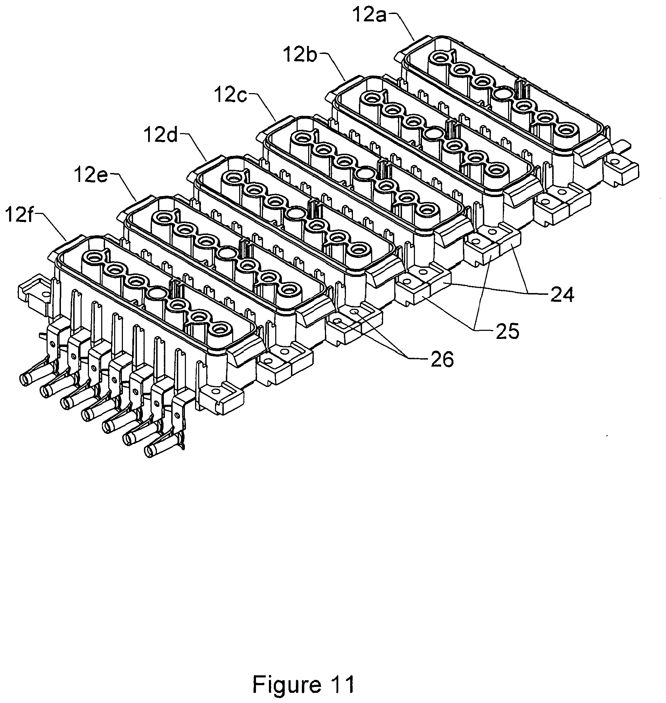

Referring to Figure 11, each of the plurality of sockets 12a-f are placed on top of the respective rows of socket contacts 45a-f such that each individual socket contact 38 is located within a corresponding socket contact receiving hole 18. The pairs of projections 24, 25 on adjacent sockets interlock with one another and ensure that every socket 12a-f has the same orientation.

Referring again to Figure 3, the plurality of locking members 13a-e are placed between respective adjacent sockets 12a-f in order to fix the sockets 12a-f in place. In more detail, the end of each rib 19 of a particular socket 12a-f engages with a corresponding pocket 31 at the top of the slot 30 of a corresponding locking member 13a-e in order to couple each socket 12a-f to a locking member 13a-e. Furthermore, each pair of pins 34 on each locking member 13a-e engages with a corresponding pair of holes 26 formed in adjacent pairs of projections 24, 25 on adjacent sockets 12a-f. The interconnection socket 14 is placed over the row of socket contacts 45g which are bent at ninety degrees to the other rows 45a-f. In this position, the guide members 36 on the respective end faces 35 of the interconnection socket 14 fit into the gap between the projections 24, 25 of the end socket 12f. The guide members 36 and the projections 24, 25 of all the sockets 12a-f are sized so as to be slidably receivable within the socket assembly retaining channels 9a, 9b of the housing 2.

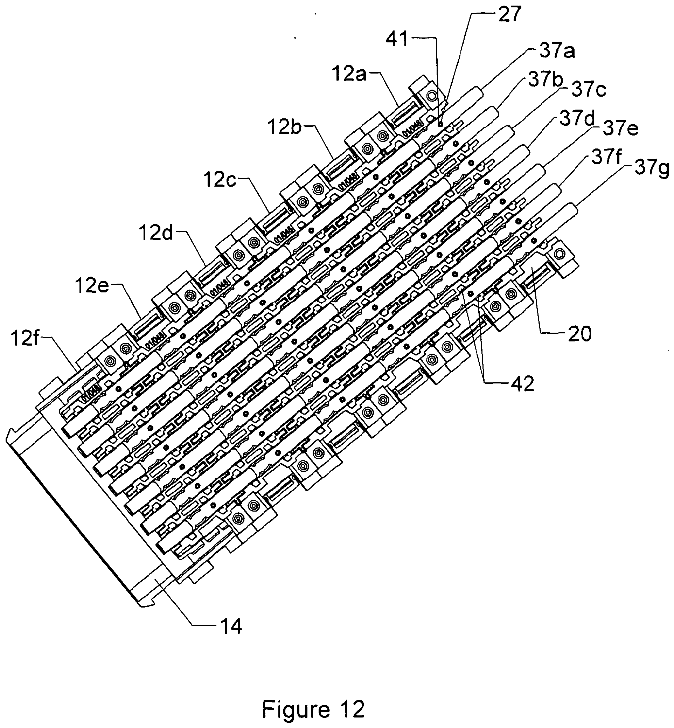

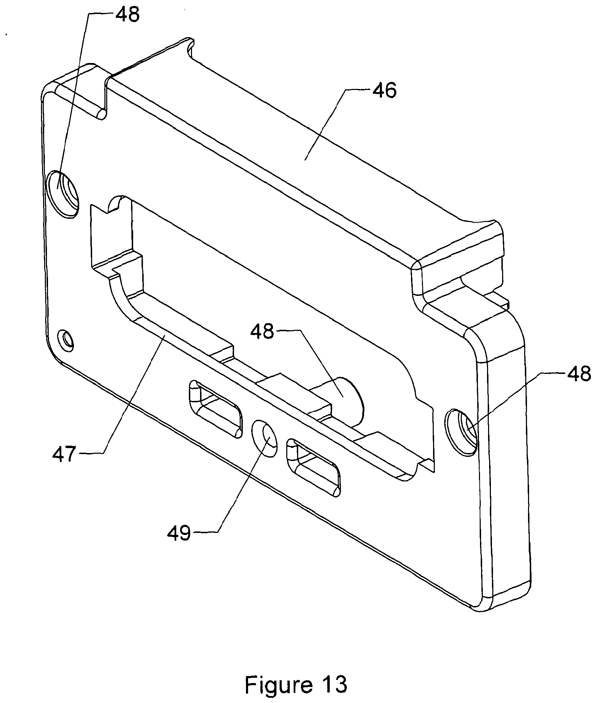

Referring to Figure 12, it can be seen that each of the electrically conductive members 37a-g is coupled to the plurality of sockets 12a-f, with the pins 27 acting as guides to register each elongate strip with the base 20 of each socket 12a-f. In this way, the pins 27 are able to engage with respective holes 41 in the elongate strips which facilitates correct alignment and positioning of the strip relative to the socket Furthermore, the barbs 42 on each elongate strip engage with the respective recesses 19a in the ribs 19 of each socket base 20 when the sockets 12a-f are pressed into position which secures the members 37a-g to the sockets 12a-f. In practice, once the elongate strip is received into the gap between the ribs 19 the barbs 42 are pressed flat, which forces them into the respective recesses 19a of the ribs 19 thereby retaining the strip in the socket (cf. Figure 5). Referring to Figure 13, there is shown an end cap 46 comprising an opening 47 through which the interconnection socket 14 protrudes when the end cap 46 is attached to the housing 2. Holes 48 on either side of the opening 47 enable the end cap 46 to be coupled to the housing 2 by means of screws which attach to the attachment points 10a, 10b on the housing 2. The end cap 46 also comprises a boss 48 disposed adjacent to the opening 47 which extends into the housing 2 when the end cap 46 is attached thereto. The boss 48 features a blind bore 49 which opens on the exterior surface of the end cap 46. The blind bore 49 allows a screw fixing to be attached to the end cap 46, which is used for mounting the connection unit 1 in place as will be described in more detail later.

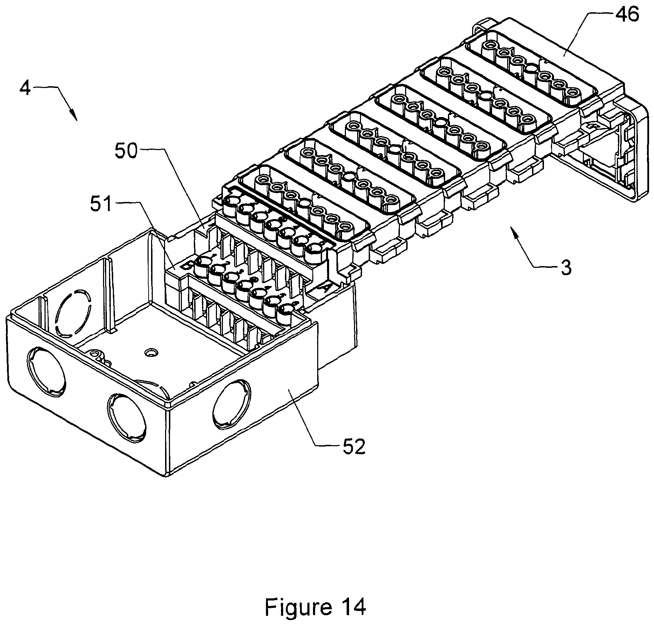

Referring to Figure 14, a terminal block assembly 4 is shown which comprises first and second terminal blocks 50, 51 and a terminal block enclosure 52.

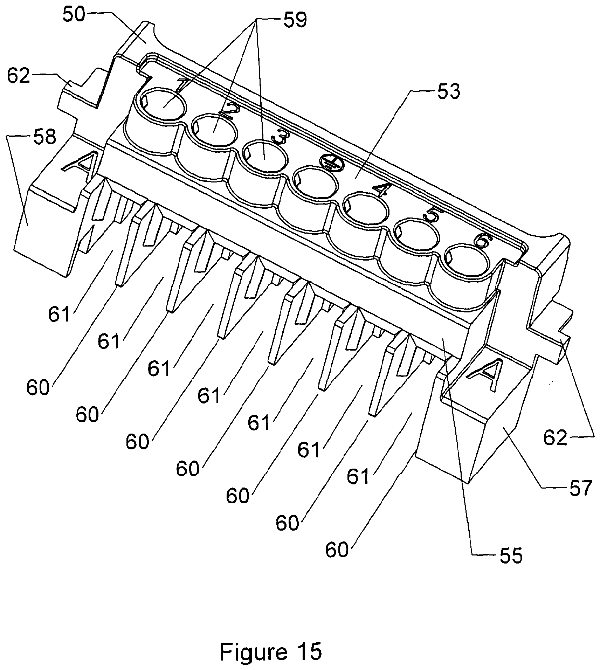

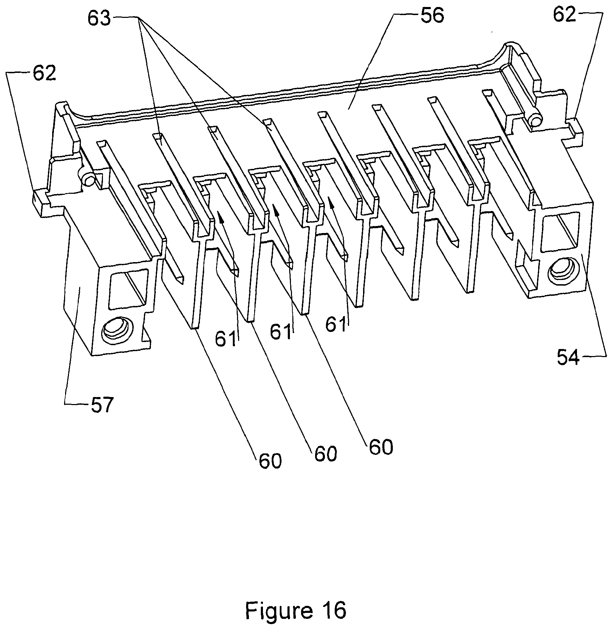

Referring to Figures 15 and 16, the first terminal block 50 is an elongate member having an upper surface 53, a base 54, a first side 55, a second side 56 and first end 57 and a second end 58. The upper surface 53 is provided with a plurality of openings 59 for receiving and retaining a respective plurality of screws therein. Below the openings 59, a plurality of projections 60 extend in a downward direction parallel to the first and second ends 57, 58. The projections 60 define a plurality of connector receiving cavities 61 therebetween, such that each of the connector receiving cavities 61 are accessible from each of the first and second sides 55, 56 and from below.

Each of the first and second ends 57, 58 of the first terminal block 50 is provided with a guide member 62 which is arranged so as to be received within respective ones of the socket assembly receiving channels 9a, 9b of the housing 2 when the terminal block assembly 4 and socket assembly 3 are fitted to the housing 2. The second side 56 of the first terminal block 50 is provided with a plurality of parallel slots 63 which are similar to those provided on the sides of each locking member 13a-e. Thus, the slots 63 on the first terminal block 50 enable it to be coupled to the ribs 19 of the adjacent socket 12a as described previously.

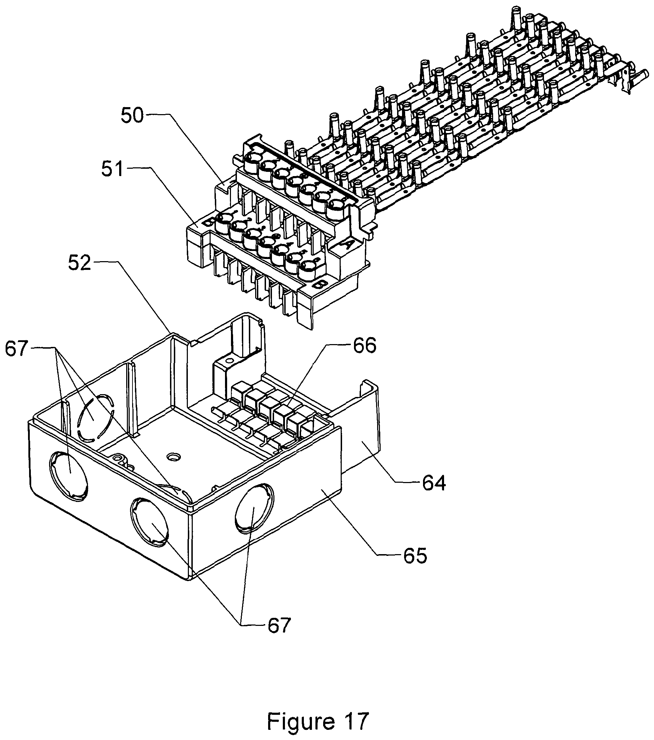

Referring to Figure 17, the terminal block enclosure 52 comprises first and second portions 64, 65. The first portion 64 is sized so as to fit within the housing 2 when the terminal block assembly 4 attached thereto. Furthermore, the first portion 64 is provided with a stacking structure 66 which conforms to the shape of the second terminal block 51 allowing the second terminal block 51 to be seated securely within the first portion 64 of the terminal block enclosure 52. The upper surface of the second terminal block 51 is provided with a similar stacking structure which enables the first terminal block 50 to be seated securely on top of it. The second terminal block 51 is otherwise similar to the first terminal block 50 being arranged so as to house a plurality of pillar connectors (not shown in Figure 17). The second portion 65 of the terminal block enclosure 52 is a box having a base, side walls and a lid, which is shown in Figure 1. A plurality of punch-out sections 67 are provided in the base and side walls of the second portion 65.

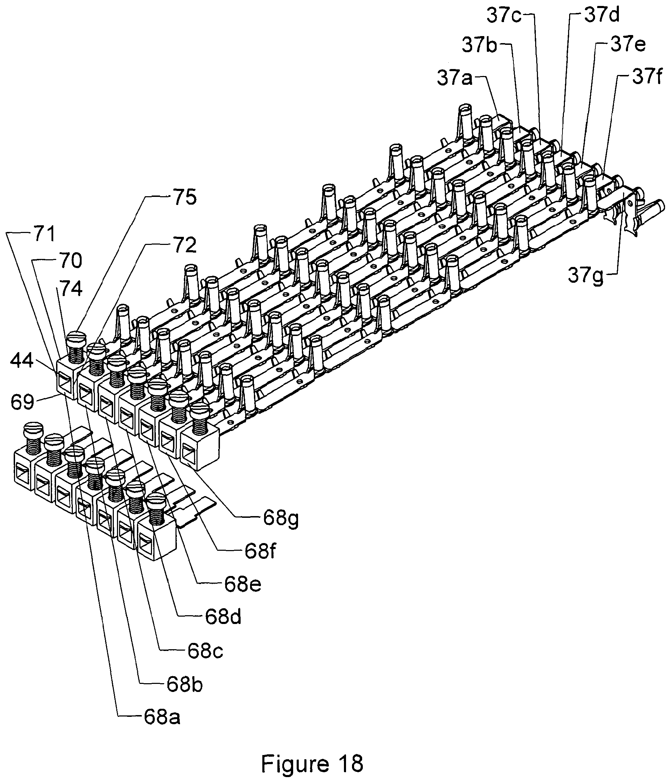

Referring to Figure 18, each of the electrically conductive members 37a-g are coupled to a respective one of a plurality of pillar connectors 68a-g of the first terminal block 50. Each pillar connector 68a-g comprises a hollow member having a base 69, a top 70, and a pair of side walls 71, 72 which together define a wire receiving opening 73 therebetween. The top 70 is provided with a threaded hole 74 into which a screw 75 is inserted. The pillar connectors 68a-g are coupled to the first terminal block 50 by first inserting a screw 75 into each of the openings 59 in the upper surface 59, each connector 68a-g is inserted into one of the connector receiving cavities 61 such that the screw 75 engages with the threaded hole 74 in the top 70 of each connector 68a-g.

As explained previously, the first terminal block 50 is coupled to the socket assembly 3 by the ribs 19 of the end socket contact 12a engaging with the slots 63 on the second side 56 of the first terminal block 50. When coupled in this way, the respective second ends 44 of the elongate strips extend into the connector receiving cavities 61 of the first terminal block 50. Accordingly, as shown in Figure 18, the second end 44 of each of the elongate strips also extends into the wire receiving opening 73 of each of the respective pillar connectors 68 a-g of the first terminal block 50.

The above-described terminal block assembly 4 enables wires from an external source to be connected to each of the plurality of sockets 12a-f, and the interconnection socket 14 of the socket assembly 3. As explained previously, the wires may include, live, earth, neutral wires, etc. Depending on the orientation in which the connection unit 1 is installed, an appropriate punch-out section 67 of the terminal block enclosure 52 can be removed to allow the wires to pass into the terminal block enclosure 52.

Each wire can be attached to the first terminal block 50 by inserting a stripped wire end into the one of the connector receiving cavities 61 in the first side 55 of the first terminal block 50, such that it is received within the wire receiving opening 73 of a particular pillar connector, i.e. 68a. In this position, the end of the wire lies between the base 69 of the pillar connector 68a and the second end 44 of the elongate strip. When the screw 75 of the block connector 68a is tightened, the base 69 of the pillar connector 68a rises up relative to the second end 44 of the elongate strip, thereby sandwiching and securing the wire end therebetween. By repeating this process and attaching the other wires to the remaining pillar connectors 68b-g of the first terminal block 50, each of the sockets 12a-f, 14 are provided with a connection to each of the respective wires.

The connection unit 1 having the above-described configuration has a number of advantages. Firstly, by employing a plurality of electrically conductive members 37a-g, the need for a separate PCB is obviated, which thereby potentially reduces the cost of the connection unit 1. Furthermore, the elongate strips may be formed by machine pressing a strip of electrically conductive material, such as a metal or metal alloy, which is generally simple and inexpensive. Furthermore, since no soldering is required, the time and cost manufacturing the connection unit is reduced.

The elongate strips can be formed as a continuous strip of material, which is cut to appropriate lengths depending on how many sockets the connection unit to which it is to be fitted is provided with. Thus, it is simple to make connection units having any number of sockets, e.g. 10-way or 12-way connection units, thereby enhancing the scalability of the present invention.

Moreover, the flat second end 44 of each elongate strip forms an advantageously good electrical connection with the external wires when the screw 75 on each pillar connector 68a-g is tightened.

In the above described embodiment, each socket 12a-f, 14 is connected to the same external circuit since each of the electrically conductive members 37a-g connect to the first terminal block 50. However, it is possible to configure the connection unit 1 so that at least some of the sockets are connected to a second circuit provided by wires which are connected to the second terminal block 51. In this way, it is then possible to separately control different sockets, depending on the particular application or required result. In this embodiment, the electrically conductive members 37a-g are each split at an appropriate point, for example between the rows of socket contacts 45c, 45d associated with the middle two sockets 12c, 12d. In this case, only the first three sockets 12a-c are connected to the first terminal block 50. The remaining sockets 12d-f, 14 are connected to the second terminal block 51, for example, by a plurality of intermediate connecting wires. This is advantageous because it allows the connection unit 1 to be customized after manufacture and at the time of installation. It may also be the case that only some of the members 37a-g need to be split, for example a member connected to a 'switch live' wire could be split to provide two separately switchable circuits for example. Alternatively, it could be that only the interconnection circuit 14 is connected to the second terminal block 51, such that any further connection units which are connected to the interconnection socket 14 are on a separate circuit.

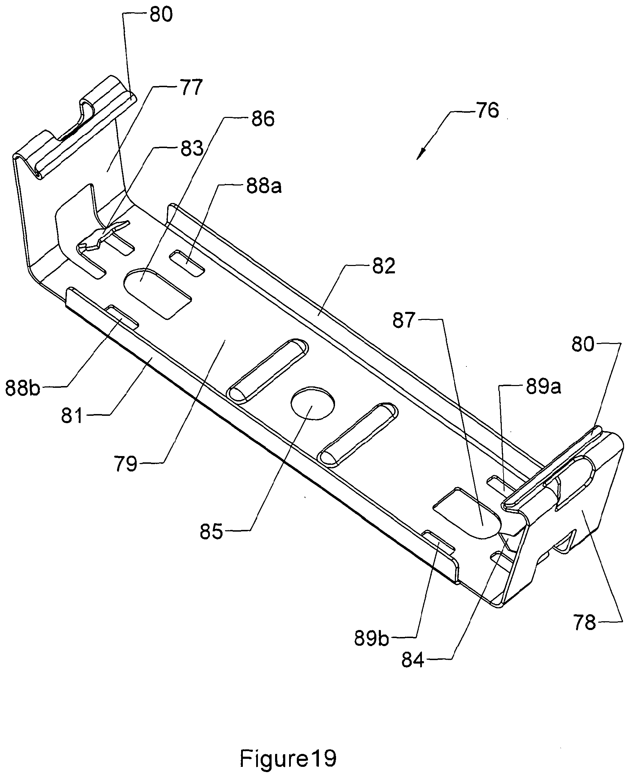

Referring to Figure 19, a mounting bracket 76, not part of the invention, comprises an elongate member formed from a strip of metal. The mounting bracket 76 has first and second end portions 77, 78 which extend substantially perpendicular to a third central portion 79. Each of the first and second end portions 77, 78 terminates in a hooked portion 80. The central portion 79 comprises first and second flanges 81, 82 which extend along either edge thereof between the first and second end portions 77, 78. The base 5 of the housing 2 of the connection unit 1 rests upon each of the flanges 81, 82 when it is attached to the mounting bracket 76. The third portion 79 is provided with first and second spring members 83, 84, comprising a folded metal tab, disposed at respective ends thereof, adjacent to the first and second end portions 77, 78, respectively. The third portion 79 also has a plurality of attachment holes formed therein, including a first hole 85 which is circular and formed in the centre of the third portion 79, second and third holes 86, 87 disposed on opposite sides of the first hole 85 adjacent to the first and second spring members 83, 84 respectively and fourth and fifth holes 88a, 88b and sixth and seventh holes 89a, 89b formed in respective pairs on opposite sides of each of the second and third holes 86, 87, respectively.

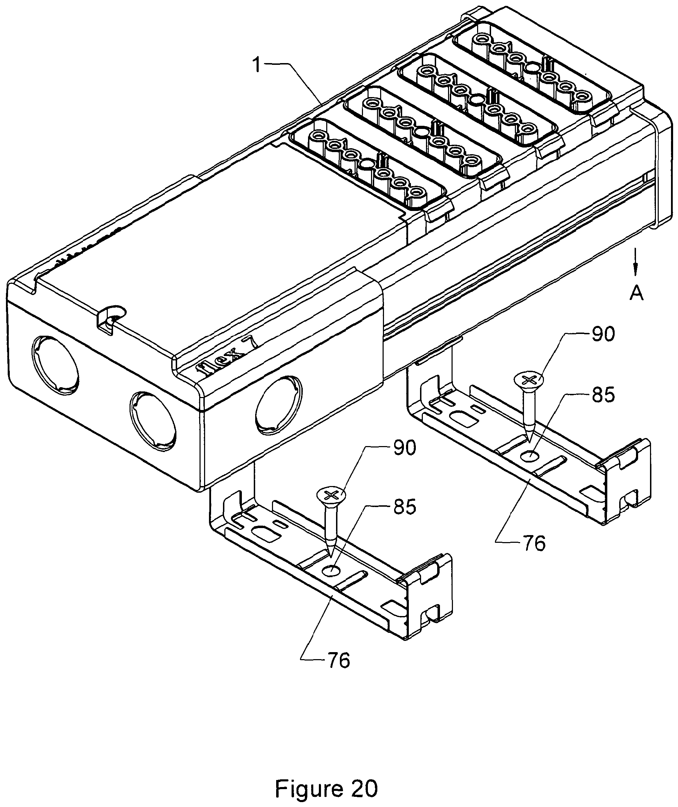

Referring to Figure 20, a first method of mounting the connection unit 1 using the above-described mounting bracket 76 comprises first fixing the mounting bracket 76 to a surface to which the connection unit 1 is to be mounted, such as a wall or the like, by means of a screw or nail 90 inserted through the first hole 85 of the mounting bracket 76. The number of mounting brackets 76 used may vary depending on the size of the connection unit 1. In Figure 20, the connection unit is a 4-way unit. The mounting brackets 76 may be attached to the surface by means of a nail fired from a nail gun or alternatively by a screw or bolt etc. Since the first attachment hole 85 is in the centre of the third portion 79 of the mounting bracket 76, after it has been attached to the surface, the mounting bracket 76 can be rotated into a desired orientation. Subsequently, the connection unit 1 is pushed into the mounting brackets 76 in the direction of the arrow denoted by A.

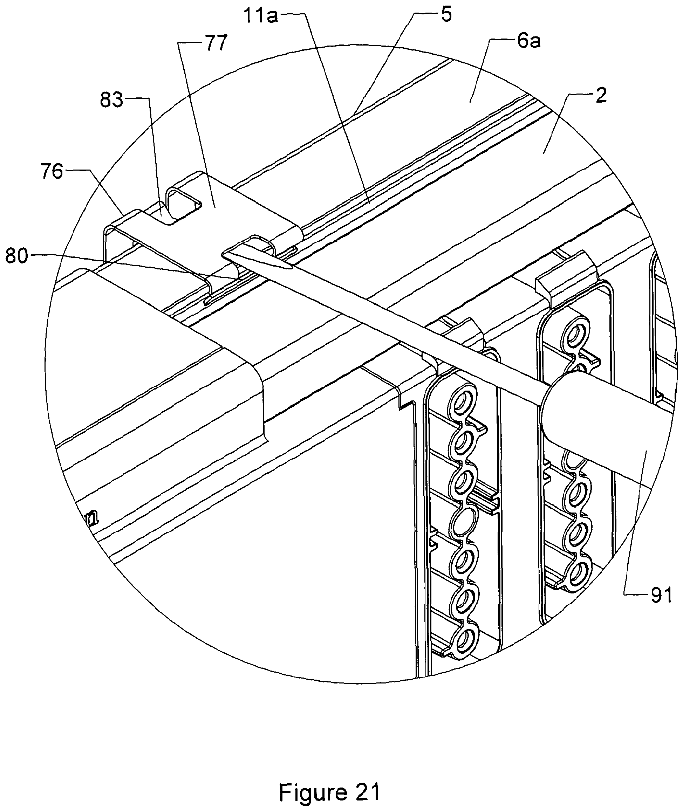

Referring to Figure 21, when the housing 2 of the connection unit 1 is inserted in the mounting bracket 76, the hook 80 of the first portion 77 engages with a lip of the installation channel 11a on the first side wall 6a. The first spring member 77 acts against the base 5 of the housing 2 so as to bias the lip of the installation channel 11a against the hook 80, thereby ensuring that the connection unit 1 fits securely within the mounting bracket 76. Similarly, the hook 80 of the second portion 78 engages with the installation channel 11b on the second side 6b of the housing 2. In this position, the base 5 of the housing 2 rests on the flanges 81, 82 of the third portion 79 of the mounting bracket 76 which provide a stable contact surface for the connection unit 1. The connection unit 1 can be removed from the mounting bracket 76 by using a suitable implement, such as a screwdriver 91, to prise the hook 80 out of installation channel 11a.

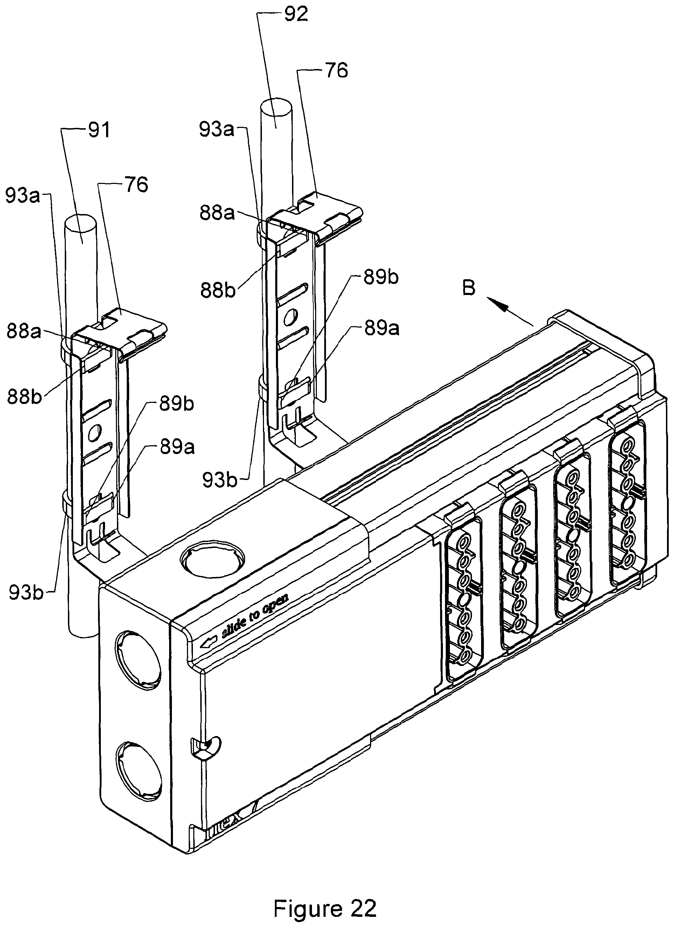

Referring to Figure 22, in a second mounting method, the connection unit 1 is attached to a pair of drop-rods 91, 92 which extend downwardly from the ceiling of a building. In this method, each mounting bracket 76 is attached to a respective drop-rod 91, 92 by means of a pair of plastic cable ties 93a, 93b. A first cable tie 93a is fed through the fourth and fifth holes 88a, 88b of the mounting bracket 76 and around the circumference of a first drop-rod 91. A second cable tie 93b is fed through the sixth and seventh holes 89a, 89b of the mounting bracket 76 and around the circumference of the first drop-rod 91. This process is repeated for another mounting bracket 76 on the second drop-rod 92. Conveniently, the position of the mounting bracket 76 on the second drop-rod 92 can be adjusted to align with the mounting bracket 76 on the first drop-rod 91 before the cable ties 93a, 93b are tightened. The connection unit 1 is then attached to the mounting brackets 76 by pushing it in the direction of the arrow B.

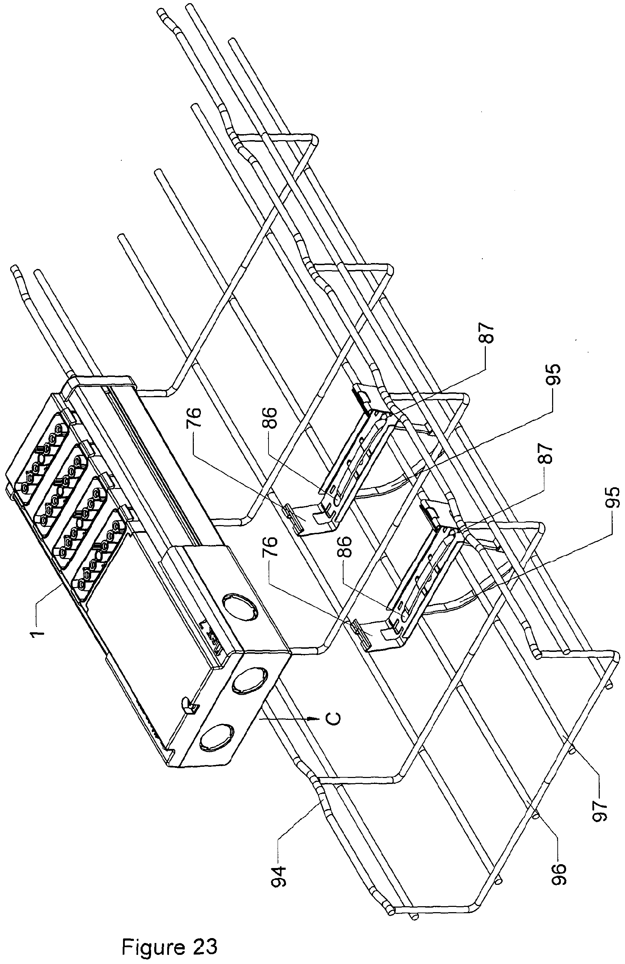

Referring to Figure 23, in a third mounting method, the connection unit 1 is mounted within a cable tray or basket 94. The cable tray 94 comprises a wire-frame structure which can be suspended from the ceiling of a room so as to support a variety of cables for providing different services to the room, e.g. power cables, data cables etc. Mounting brackets 76 may be attached to the cable tray 94 by passing a cable tie 95 through the second and third holes 86, 87 of the third portion 79 of each mounting bracket 76. Each cable tie 95 is wrapped around first and second wires 96, 97 of the cable tray 94 and tightened so as to secure the mounting brackets 76 thereto. The connection unit 1 is then attached to the mounting brackets 76 by pushing it in the direction of the arrow C.

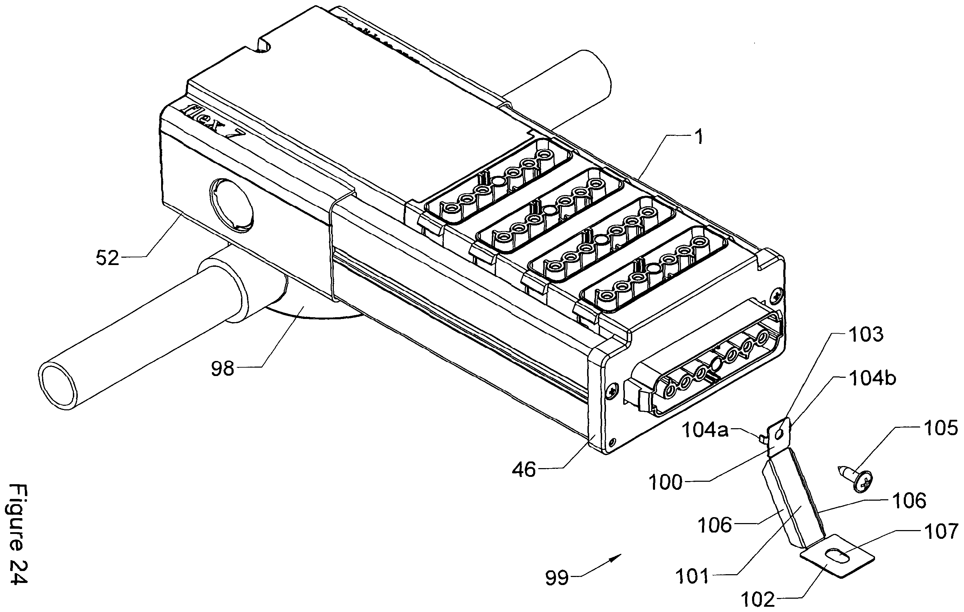

Referring to Figure 24, in a fourth mounting method, the connection unit 1 is mounted to a round conduit box 98. Firstly, it is necessary to attach the terminal block enclosure 52 to the conduit box 98. This is done by removing the appropriate punch-out section 67 in the base of the second portion 65 of the terminal block enclosure 52 to enable wires from the conduit box 98 to be connected to the first terminal block 50. The terminal block enclosure 52 can be secured to the conduit box 98 by a suitable screw fixing. Typically the conduit box 98 will be mounted on a wall of a building, however, since the terminal block enclosure 52 is disposed at one end of the connection unit 1, the distance between the end cap 46 at the other end of the connection unit 1 and the surface to which the conduit box 98 is mounted may vary. Accordingly, the end cap 46 is attached to the mounting surface by means of an adjustable support bracket 99.

The adjustable support bracket 99 comprises first, second and third portions 100, 101, 102. The adjustable support bracket 99 is made from metal and the thickness of the respective joins between the first, second and third portion 100, 101, 102 is selected so as to allow the portions to hinge relative to one another. The first portion 100 comprises a hole 103 and a pair of projections 104a, 104b disposed on opposite sides of the hole 103. The first portion 100 is attached to the end cap 46 by a screw 105 passing through the hole 103 and engaging with the blind bore 49 of the boss 48. The projections 104a, 104b engage with a respective pair of recesses disposed on either side of the blind bore 49 so as to prevent the adjustable support bracket 99 from twisting relative to the end cap 46. The second portion 101 comprises a flange 106 disposed along either edge thereof. The flanges 106 act to strengthen the second portion 101 and to prevent it from flexing. The third portion 102, comprises an elongate hole 107, which allows room for movement relative to a screw or nail which passes through the hole 107 to fix the third portion 102 to the mounting surface.

Thus, the flexible joints between each of the first, second and third portions 100, 101, 102 of the adjustable support bracket 99 and the shape of the hole 107 of the third portion 102, allow the height of the end cap 46 above the mounting surface to be adjusted so that the connection unit 1 is mounted level, with both the end cap 46 and the terminal block enclosure 52 disposed the same distance above the mounting surface.

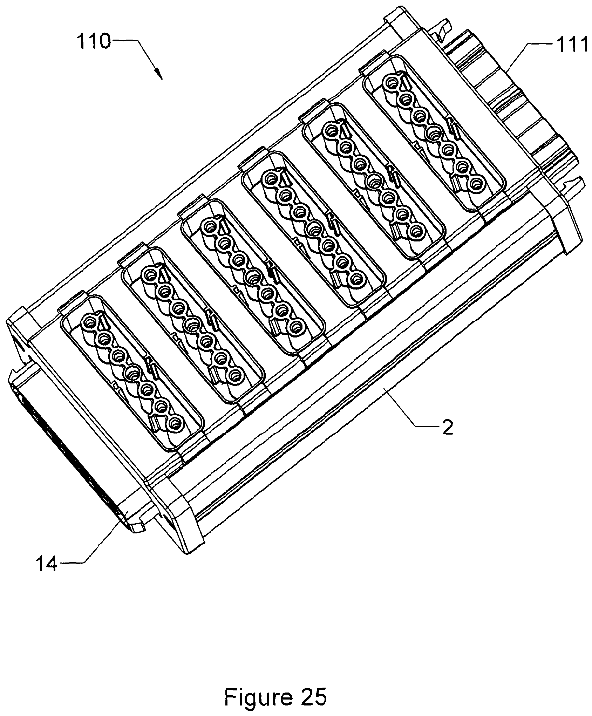

Referring to Figure 25, an interconnection unit 110 according to another embodiment of the present invention is shown. The interconnection unit 110 is structurally and functionally similar to the above described connection unit 1, with the exception that, in place of the terminal block assembly 4, it comprises an interconnection plug 111 at the opposite end of the housing 2 from the interconnection socket 14.

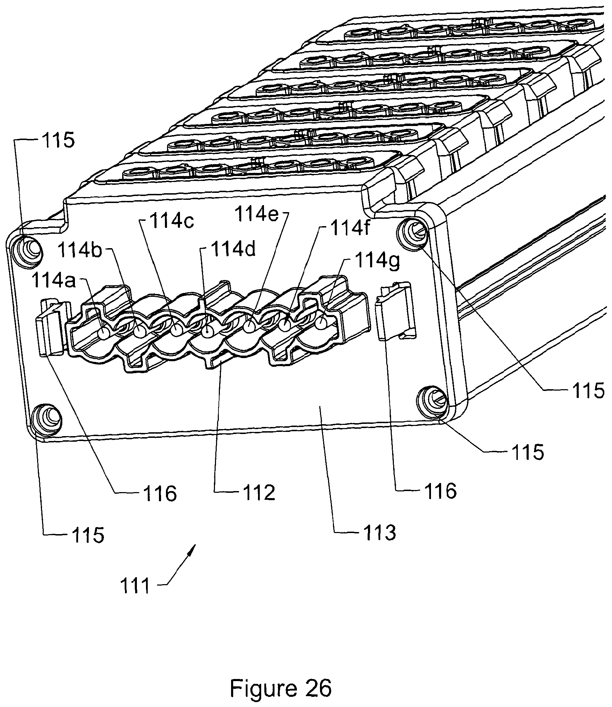

Referring to Figure 26, the interconnection plug 111 comprises a plug pin support structure 112 which is formed integrally with an end cap 113 of the housing 2. The plug pin support structure 112 is shaped so as to couple to the sockets 12a-f, 14 previously described and comprises seven plug pin receiving holes through which seven plug pins 114a-g project, respectively. The end cap 113 comprises a hole 115 in each corner which allows the interconnection plug 111 to be attached to the housing 2 by means of a screw passing through each hole 115 and engaging with respective attachment points 10a, 10b on the housing 2. The interconnection plug 111 also comprises a pair of socket retaining latches 116 disposed on opposite sides of the plug pin support structure 112. In use, the socket retaining latches 116 cooperate with corresponding plug retaining latches 22 of a socket connected to the interconnection plug 111.

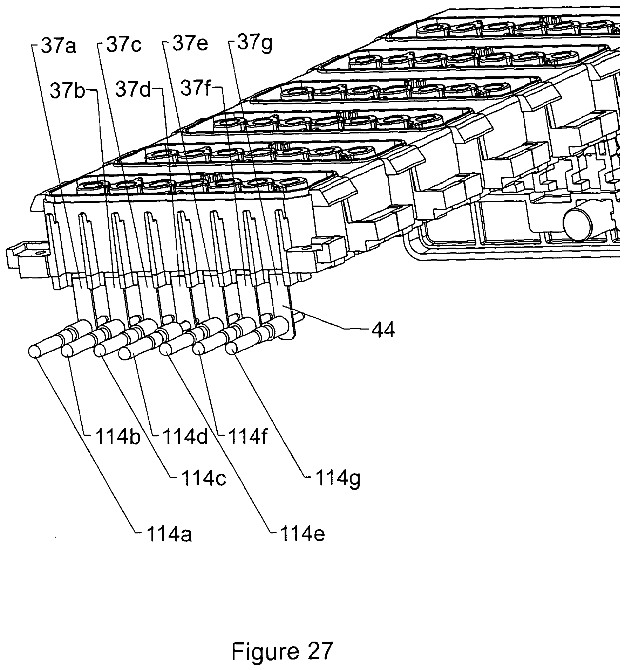

Referring to Figure 27, each of the plug pins 114-a-g slots into a hole formed in each of the respective second ends 44 of the elongate strips. The second end 44 of each of the strips is bent at right angles so that the respective plug pins 114a-g project though the plug pin receiving holes of the interconnection plug 111, when the interconnection plug 111 is attached to the housing 2 of the interconnection unit 110.

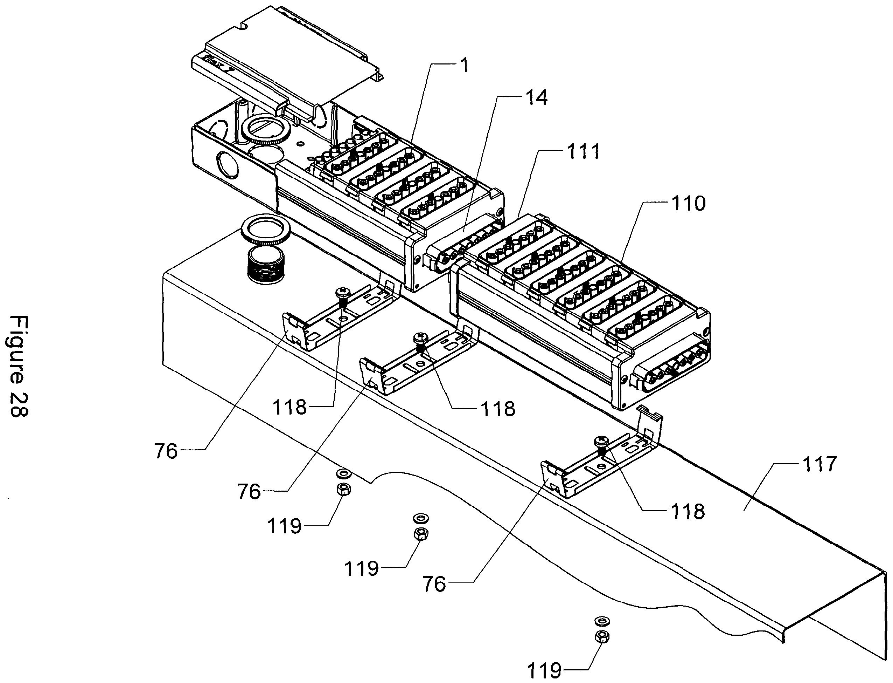

Referring to Figure 28, a mounting method for attaching a connection unit 1 and an interconnection unit 110 to a trunking system 117 will now be described. Firstly, a plurality of mounting brackets 76 are attached to the surface of the trunking system 117 by means of a nut and bolt 118, 119 coupling to the first hole 85 each of the mounting brackets 76. Two mounting brackets 76 are provided for the connection unit 1 and a further mounting bracket 76 is provided for the interconnection unit 110. As explained previously, wires from an external source are fed into the terminal block enclosure 52 to be connected to the first and/or second terminal block 50, 51 of the connection unit 1. The interconnection plug 111 of the interconnection unit 110 is plugged into the interconnection socket 14 of the connection unit 1 and the two units 1, 110 are clipped into the respective mounting brackets 76. Alternatively, it may be that the interconnection unit 110 is installed at a later time, after the connection unit 1 has already been attached to the trunking system 117. This may be the case when, for example, a greater number of sockets are required than are provided by the connection unit 1 alone. In this case, the interconnection unit 110 can be clipped into its mounting bracket 76 and, by sliding the interconnection unit 110 within the mounting 76, plugged into the interconnection socket 14 of the connection unit 1. In this way, additional interconnection units 110 can be added as required, each one requiring only a single mounting bracket 76 to fix it in place.

The above-described connection unit 1 and interconnection unit 110 having 7-pole sockets may be used in lighting systems requiring up to seven electrical connections to be made to each socket. However, it will be appreciated by the skilled person that other systems may utilize sockets having greater or fewer numbers of socket contacts and that the electrically conductive members according to the present invention may be used in any application where the same electrical input has to be provided to a number of separate outlets. Furthermore, since the electrically conductive members are preferably formed from a pressed metal or metal alloy strip, having a thickness in the range of around 0.3mm to about 0.7 mm, they are suitable for conducting much larger electrical currents than the relatively thin conducting tracks on a printed circuit board. Accordingly, a connection unit according to an embodiment of the present invention may be used for power distribution other than for lighting systems.

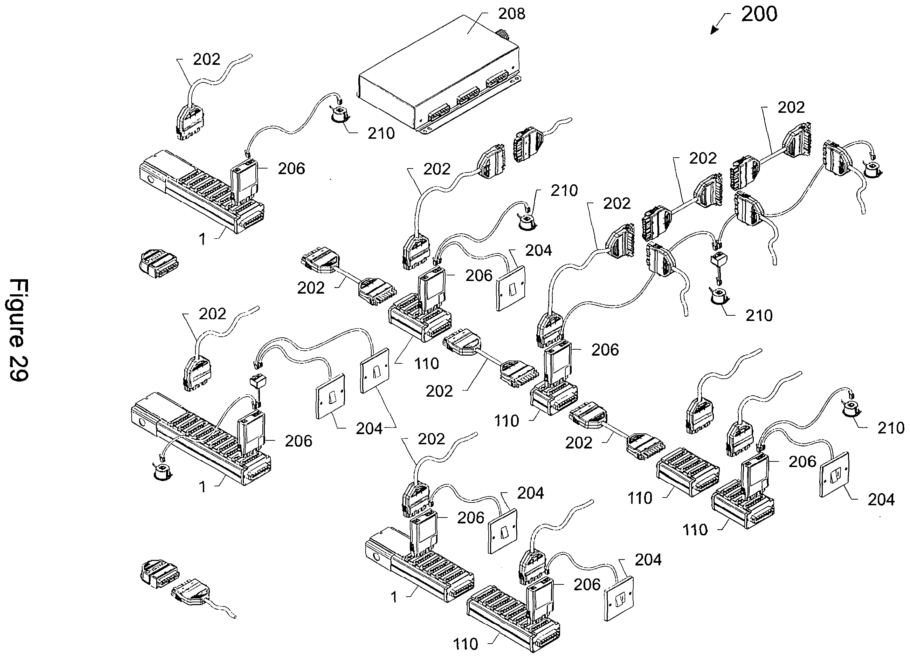

To illustrate the inherent scalability and modularity of the present invention, an example modular network 200 of devices is shown in Figure 29. As can be appreciated from this figure, any number of connection units 1, 110 may be connected together to form a desired network, which may be used to control a lighting system or other electrical system. As discussed earlier, the connection units 1, 110 can include differing numbers of socket assemblies, and may include interconnection sockets and/or interconnection plugs to facilitate connection between the units. Alternatively, cable extenders 202 may be used to connect units to each other, while switch control units 206 can be inserted into the connection units 1, 110 to allow switches 204 to be connected to enable manual switching of the electrical power. Alternatively, occupancy sensors 210 can be connected to the switch control units 206 to allow automatic switching to occur when an individual is detected within the lighting environment. A hub unit 208 may also be used for centralized switching and/or emergency test configurations etc. depending on the particular application or required control function.

## Claims

1. An electrically conductive member (37a-g) for a connection unit (1) including a plurality of sockets (12a-f), comprising:
an elongate strip of electrically conducting material comprising a plurality of protruding contacts (38) disposed along its length, wherein the protruding contacts (38) are arranged to be engageable with a respective one of the plurality of sockets (12a-f);
**characterized in that**:
it further comprises
a plurality of barbs (42) disposed along at least one edge of the elongate strip such that, in use, the barbs (42) engage with a surface of each of the plurality of sockets (12a-f) so as to secure the elongate strip thereto.

2. The member according to Claim 1, wherein the elongate strip is formed from a metal or a metal alloy, and optionally,
wherein the elongate strip has a thickness in the range of about 0.3 mm to about 0.7 mm.

3. The member according to any preceding claim, wherein the plurality of protruding contacts (38) are disposed at regularly spaced intervals along the elongate strip.

4. The member according to any preceding claim, wherein each protruding contact (38) comprises first and second portions (39a, 39b) adjoining respective opposite edges of the elongate strip, the first and second portions (39a, 39b) extending substantially perpendicularly to the longitudinal axis of the elongate strip so as to define a plug pin receiving opening therebetween, and optionally,
wherein the first and second portions (39a, 39b) are biased towards each other such that, in use, when a plug pin is inserted into the plug pin receiving opening (40), the first and second portions (39a, 39b) exert a retaining force on the plug pin, and optionally,
wherein the first and second portions (39a, 39b) have an arcuate cross-section and define a plug pin receiving opening (40) which is substantially circular.

5. The member according to any preceding claim, wherein the elongate strip comprises a hole (41) disposed adjacent to each protruding contact (38) such that, in use, the hole (41) is engageable with a pin (27) disposed on each respective socket (12a-f) so as to register the elongate strip thereto.

6. A connection unit (1) comprising:
a plurality of sockets (12a-f); and
at least one electrically conductive member according to any of Claims 1 to 5.

7. The connection unit according to Claim 6, wherein pairs of adjacent sockets (12a-f) are coupled to a locking member (13a-e) disposed therebetween.

8. The connection unit according to Claim 6 or Claim 7, further comprising:
an interconnection socket (14); and
wherein the elongate strip comprises a substantially right angle bend at a first end (43) thereof, such that at least one protruding contact (38) disposed proximal to the first end (43) is engageable with the interconnection socket (14).

9. The connection unit according to any of Claims 6 to 8, further comprising:
an interconnection plug (111); and
wherein a second end (44) of the elongate strip comprises a substantially right angle bend such that a plug pin is coupled to the second end (44) so as to be engageable with the interconnection plug (111).

10. The connection unit according to any of Claims 6 to 8, further comprising:
a terminal block (50) including at least one pillar connector (68a-g), the at least one pillar connector comprising an opening therein; and
wherein a second end (44) of the elongate strip projects into the opening.

11. The connection unit according to any of Claims 8 to 10, wherein each of the plurality of sockets (12a-f) comprises a plug receiving cavity (16) and at least one receiving hole (18) extending from the base (20) of the socket (12a-f) into the plug receiving cavity (16) for receiving a protruding contact (38), and optionally,
wherein
(i) the electrically conductive member is disposed adjacent to the respective socket bases (20) such that each one of the plurality of protruding contacts (38) projects through a respective one of the receiving holes (18) of each socket (12a-f) into a respective plug receiving cavity (16), or
(ii) the elongate strip comprises a hole (41) disposed adjacent to each protruding contact (38) which is engageable with a pin (27) disposed adjacent to the receiving hole (18) on the socket base (20) of each of the plurality of sockets (12a-f) so as to register the elongate strip thereto.

12. The connection unit according to any of Claims 8 to 11, further comprising a plurality of elongate strips of electrically conductive material, each strip including a respective plurality of protruding contacts (38) disposed at regularly spaced intervals along its length.

13. The connection unit according to any of Claims 8 to 12, further comprising:
a housing (2),
and wherein the plurality of sockets (12a-f) and the at least one electrically conductive member define a socket assembly (3), the socket assembly (3) being retained within the housing (2), and optionally,
wherein the housing (2) comprises:
a base (5);
first and second side walls (6a, 6b) which extend perpendicularly from opposite edges of the base (5), and
wherein each of the first and second side walls (6a, 6b) comprise a channel (9a) formed in the respective exterior surface thereof, each channel (9a) extending in a direction parallel to said edges of the base (5) and being spaced apart therefrom.

## Patentansprüche

1. Elektrisch leitendes Element (37a-g) für eine Verbindungseinheit (1), die eine Viehzahl von Buchsen (12a-f) einschließt, umfassend:
einen länglichen Streifen aus elektrisch leitendem Material, der eine Viehzahl über seine Länge angeordnete vorstehende Kontakte (38) umfasst, wobei die vorstehenden Kontakte (38) eingerichtet sind, um mit einer entsprechenden der mehreren Buchsen (12a-f) in Eingriff gebracht werden zu können;
**dadurch gekennzeichnet, dass**:
es ferner umfasst
eine Vielzahl von Spitzen (42), die entlang mindestens einer Kante des länglichen Streifens angeordnet sind, so dass die Spitzen (42) im Gebrauch mit einer Oberfläche jeder der Vielzahl von Buchsen (12a-f) in Eingriff stehen, um den länglichen Streifen daran zu sichern.

2. Element nach Anspruch 1, wobei der längliche Streifen aus einem Metall oder einer Metalllegierung gebildet ist und optional,
wobei der längliche Streifen eine Dicke im Bereich von ungefähr 0,3 mm bis ungefähr 0,7 mm hat.

3. Element nach einem der vorhergehenden Ansprüche, wobei die mehreren vorstehenden Kontakte (38) in regelmäßigen Intervallen entlang des länglichen Streifens angeordnet sind.

4. Element nach einem der vorhergehenden Ansprüche, wobei jeder vorstehende Kontakt (38) einen ersten und einen zweiten Abschnitt (39a, 39b) umfasst, die an entsprechenden gegenüberliegenden Kanten des länglichen Streifens angrenzen, wobei sich der erste und der zweite Abschnitt (39a, 39b) im Wesentlichen senkrecht zu der Längsachse des länglichen Streifens erstrecken, um eine Steckerstiftaufnahmeöffnung dazwischen zu definieren, und optional,
wobei der erste und der zweite Abschnitt (39a, 39b) so gegeneinander vorgespannt sind, dass im Gebrauch, wenn ein Steckerstift in die Steckerstiftaufnahmeöffnung (40) eingesetzt ist, der erste und der zweite Abschnitt (39a, 39b) eine Haltekraft auf den Steckerstift ausüben, und optional,
wobei der erste und der zweite Abschnitt (39a, 39b) einen bogenförmigen Querschnitt haben und eine Steckerstiftaufnahmeöffnung (40) definieren, die im Wesentlichen kreisförmig ist.

5. Element nach einem der vorhergehenden Ansprüche, wobei der längliche Streifen ein Loch (41) umfasst, das benachbart zu jedem vorstehenden Kontakt (38) angeordnet ist, so dass im Gebrauch das Loch (41) mit einem Stift (27) in Eingriff gebracht werden kann, der an jeder entsprechenden Buchse (12a-f) angeordnet ist, um den länglichen Streifen darin einzurasten.

6. Verbindungseinheit (1), umfassend:
eine Vielzahl von Buchsen (12a-f); und
mindestens ein elektrisch leitendes Element nach einem der Ansprüche 1 bis 5.

7. Verbindungseinheit nach Anspruch 6, wobei Paare benachbarter Buchsen (12a-f) mit einem dazwischen angeordneten Verriegelungselement (13a-e) gekoppelt sind.

8. Verbindungseinheit nach Anspruch 6 oder Anspruch 7, ferner umfassend:
eine Verbindungsbuchse (14); und
wobei der längliche Streifen an einem ersten Ende (43) davon eine im Wesentlichen rechtwinklige Biegung umfasst, so dass mindestens ein vorstehender Kontakt (38), der in der Nähe des ersten Endes (43) angeordnet ist, mit der Verbindungsbuchse (14) in Eingriff gebracht werden kann.

9. Verbindungseinheit nach einem der Ansprüche 6 bis 8, ferner umfassend:
einen Verbindungsstecker (111); und
wobei ein zweites Ende (44) des länglichen Streifens eine im Wesentlichen rechtwinklige Biegung umfasst, so dass ein Steckerstift mit dem zweiten Ende (44) gekoppelt ist, um so mit dem Verbindungsstecker (111) in Eingriff gebracht werden zu können.

10. Verbindungseinheit nach einem der Ansprüche 6 bis 8, ferner umfassend:
einen Anschlussblock (50), der mindestens einem Säulenverbinder (68a-g) einschließt, wobei der mindestens eine Säulenverbinder eine Öffnung darin umfasst; und
wobei ein zweites Ende (44) des länglichen Streifens in die Öffnung ragt.

11. Verbindungseinheit nach einem der Ansprüche 8 bis 10, wobei jede der mehreren Buchsen (12a-f) einen Steckeraufnahmehohlraum (16) und mindestens ein Aufnahmeloch (18) umfasst, das sich von der Basis (20) der Buchse (12a-f) in den Steckeraufnahmehohlraum (16) zur Aufnahme eines vorstehenden Kontakts (38) erstreckt, und optional,
wobei
(i) das elektrisch leitende Element benachbart zu den entsprechenden Buchsenbasen (20) angeordnet ist, so dass jeder der mehreren vorstehenden Kontakte (38) durch ein entsprechendes der Aufnahmelöcher (18) jeder Buchse (12a-f) in einen entsprechenden Steckeraufnahmehohlraum (16) ragt, oder
(ii) der längliche Streifen ein Loch (41) umfasst, das benachbart zu jedem vorstehenden Kontakt (38) angeordnet ist, der mit einem Stift (27) in Eingriff gebracht werden kann, der benachbart zu dem Aufnahmeloch (18) an der Buchsenbasis (20) von jeder der Buchsen von jeder der Vielzahl von Buchsen (12a-f) angeordnet ist, um den länglichen Streifen darin einzurasten.

12. Verbindungseinheit nach einem der Ansprüche 8 bis 11, die ferner mehrere längliche Streifen aus elektrisch leitendem Material umfasst, wobei jeder Streifen eine entsprechende Vielzahl von hervorstehenden Kontakten (38) einschließt, die in regelmäßigen Intervallen entlang seiner Länge angeordnet sind.

13. Verbindungseinheit nach einem der Ansprüche 8 bis 12, ferner umfassend:
ein Gehäuse (2),
und wobei die Vielzahl von Buchsen (12a-f) und das mindestens eine elektrisch leitende Element eine Buchsenanordnung (3) definieren, wobei die Buchsenanordnung (3) in dem Gehäuse (2) festgehalten ist, und optional,
wobei das Gehäuse (2) umfasst:
eine Basis (5);
erste und zweite Seitenwände (6a, 6b), die sich senkrecht von gegenüberliegenden Kanten der Basis (5) erstrecken, und
wobei jede der ersten und zweiten Seitenwände (6a, 6b) einen Kanal (9a) umfasst, der in der entsprechenden Außenfläche davon ausgebildet ist, wobei sich jeder Kanal (9a) in einer Richtung parallel zu den Kanten der Basis (5) erstreckt und davon beabstandet ist.

## Revendications

1. Élément électriquement conducteur (37a-g) pour une unité de connexion (1) incluant une pluralité de douilles (12a-f), comprenant :
une bande allongée de matériau électriquement conducteur comprenant une pluralité de contacts en saillie (38) disposés le long de sa longueur, dans lequel les contacts en saillie (38) sont agencés pour pouvoir être mis en prise avec l'une respective de la pluralité de douilles (12a-f) ;
**caractérisé en ce que**
il comprend en outre une pluralité de barbes (42) disposées le long d'au moins un bord de la bande allongée de telle sorte qu'en utilisation, les barbes (42) viennent en prise avec une surface de chacune des douilles (12a-f) de manière à y fixer la bande allongée.

2. Elément selon la revendication 1, dans lequel la bande allongée est formée à partir d'un métal ou d'un alliage métallique, et facultativement
dans lequel la bande allongée a une épaisseur dans la plage d'environ 0,3 mm à environ 0,7 mm.

3. Elément selon l'une quelconque des revendications précédentes, dans lequel la pluralité de contacts en saillie (38) sont disposés à des intervalles espacés régulièrement le long de la bande allongée.

4. Elément selon l'une quelconque des revendications précédentes, dans lequel chaque contact en saillie (38) comprend des première et seconde parties (39a, 39b) attenantes à des bords opposés respectifs de la bande allongée, les première et seconde parties (39a, 39b) s'étendant sensiblement perpendiculairement par rapport à l'axe longitudinal de la bande allongée de manière à définir une ouverture de réception de broche de fiche entre les deux, et facultativement,
dans lequel les première et seconde parties (39a, 39b) sont sollicitées l'une vers l'autre de sorte qu'en utilisation, lorsqu'une broche de fiche est insérée dans l'ouverture de réception de broche de fiche (40), les première et seconde parties (39a, 39b) exercent une force de retenue sur la broche de fiche, et facultativement,
dans lequel les première et seconde parties (39a, 39b) ont une section transversale en arc et définissent une ouverture de réception de broche de fiche (40) qui est sensiblement circulaire.

5. Elément selon l'une quelconque des revendications précédentes, dans lequel la bande allongée comprend un trou (41) disposé adjacent à chaque contact en saillie (38), de sorte qu'en utilisation, le trou (41) peut être mis en prise avec une broche (27) disposée sur chaque douille respective (12a-f) de manière à y caler la bande allongée.

6. Unité de connexion (1) comprenant :
une pluralité de douilles (12a-f) ; et
au moins un élément électriquement conducteur selon l'une quelconque des revendications 1 à 5.

7. Unité de connexion selon la revendication 6, dans laquelle des paires de douilles adjacentes (12a-f) sont couplées à un élément de verrouillage (13a-e) disposé entre elles.

8. Unité de connexion selon la revendication 6 ou la revendication 7, comprenant en outre :
une douille d'interconnexion (14) ; et
dans laquelle la bande allongée comprend un coude sensiblement à angle droit au niveau de sa première extrémité (43), de sorte qu'au moins un contact en saillie (38) disposé à proximité de la première extrémité (43) peut être mis en prise avec la douille d'interconnexion (14).

9. Unité de connexion selon l'une quelconque des revendications 6 à 8, comprenant en outre :
une fiche d'interconnexion (111) ; et
dans laquelle une seconde extrémité (44) de la bande allongée comprend un coude sensiblement à angle droit de sorte qu'une broche de fiche est couplée à la seconde extrémité (44) de manière à pouvoir être mise en prise avec la fiche d'interconnexion (111).

10. Unité de connexion selon l'une quelconque des revendications 6 à 8, comprenant en outre :
un bornier (50) incluant au moins un connecteur de pilier (68a-g), le au moins un connecteur de pilier comprenant une ouverture dans celui-ci ; et
dans lequel une seconde extrémité (44) de la bande allongée fait saillie dans l'ouverture.

11. Unité de connexion selon l'une quelconque des revendications 8 à 10, dans laquelle chacune de la pluralité de douilles (12a-f) comprend une cavité de réception de fiche (16) et au moins un trou de réception (18) s'étendant depuis la base (20) de la douille (12a-f) jusque dans la cavité de réception de fiche (16) pour recevoir un contact en saillie (38), et facultativement,
dans lequel
(i) l'élément électriquement conducteur est disposé de manière adjacente aux bases de douille respectives (20), de sorte que chacun des contacts en saillie (38) fait saillie à travers l'un respectif des trous de réception (18) de chaque douille (12a-f) jusque dans une cavité de réception de fiche (16) respective, ou
(ii) la bande allongée comprend un trou (41) disposé adjacent à chaque contact en saillie (38) qui peut être mis en prise avec une broche (27) disposée adjacente au trou de réception (18) sur la base de douille (20) de chacun de la pluralité de douilles (12a-f) de manière à y caler la bande allongée.

12. Unité de connexion selon l'une quelconque des revendications 8 à 11, comprenant en outre une pluralité de bandes allongées de matériau électriquement conducteur, chaque bande incluant une pluralité respective de contacts en saillie (38) disposés à des intervalles espacés régulièrement sur sa longueur.

13. Unité de connexion selon l'une quelconque des revendications 8 à 12, comprenant en outre :
un logement (2),
et dans lequel la pluralité de douilles (12a-f) et le au moins un élément électriquement conducteur définissent un ensemble de douilles (3), l'ensemble de douilles (3) étant retenu dans le boîtier (2), et facultativement,
dans lequel le boîtier (2) comprend :
une base (5) ;
des première et seconde parois latérales (6a, 6b) qui s'étendent perpendiculairement à partir de bords opposés de la base (5), et
dans lequel chacune des première et seconde parois latérales (6a, 6b) comprend un canal (9a) formé dans sa surface extérieure respective, chaque canal (9a) s'étendant dans une direction parallèle auxdits bords de la base (5) et étant espacé de ceux-ci.
